# EUROPEAN PATENT SPECIFICATION

(11) **EP 0 716 874 B1**
(45) Date of publication and mention of the grant of the patent: **06.10.1999**
(21) Application number: 95307909.2
(22) Date of filing: 06.11.1995
(51) Int. Cl.: B01D 53/053

(54) **Solvent recovery**
Lösungsmittelzurückgewinnung
Récupération de solvants

(30) Priority: 13.12.1994 GB 9425111
(43) Date of publication of application: 19.06.1996
(73) Proprietor: The BOC Group plc, Windlesham Surrey GU20 6HJ (GB)
(72) Inventor: Garrett, Michael Ernest, Woking, Surrey, GU22 7XR (GB)
(74) Representative: Gough, Peter

(56) References cited:
- EP-A- 0 201 235

## Description

The present invention relates to solvent recovery and relates particularly, but not exclusively, to recovering solvent vapours from air or inert gas.

Recovery of solvent vapour from air or inert gas during industrial processes is becoming more important. Hydrocarbon solvents are very widely used in processes such as : paint spraying; magnetic tape and plastics manufacture and dry cleaning to name but a few. The release of these solvents into the atmosphere has an undesirable affect on those people working or living within the area of release. Also, environmental damage can be considerable. A number of devices have been developed to capture the solvents either for later disposal by incineration or sometimes for recycling.

Presently known solvents recovery devices tend to rely on adsorption onto a medium such as carbon, activated carbon or even zeolites followed by subsequent regeneration. This process has the effect of concentrating the solvent which may be at a very small concentration in the gas stream being treated. Typically, such devices comprise two adsorption beds, one of which acts as an adsorber while the other is being regenerated.

It is an object of the present invention to provide a simple solvent recovery system which utilises only a single bed of adsorbent material and which will concentrate the solvent for subsequent treatment or re-use.

Accordingly, the present invention provides a solvent recovery apparatus for recovering solvent from a vent gas comprises:
an adsorber vessel, having an inlet for receiving vent gas, an outlet for expelling purified gas and a purge gas inlet;
an adsorbent, in said vessel and being suitable for adsorbing said solvent;
a vacuum pump connected to the inlet of said adsorber vessel via a vacuum line;
a first buffer vessel, for receiving vent gas when it is not being passed to the adsorber vessel; and
a vacuum buffer connected to the first buffer for reducing the pressure therein and to the vacuum pump for having its pressure reduced.

It will be appreciated that by providing the first buffer it will be possible to store vent gas for treatment after adsorber regeneration, thus providing a simple but effective treatment apparatus. Also, by placing the first buffer under vacuum and utilising a control motor it will be possible to maintain the pressure constant in the vent line during regeneration.

Preferably, the apparatus includes a first buffer vacuum control valve for controlling the magnitude of the vacuum experienced by the first buffer.

Advantageously, the apparatus also includes a buffer vacuum control valve for controlling the magnitude of the vacuum experienced by the first buffer. Also, this arrangement provides a load for the vacuum pump when regeneration is completed.

Conveniently, the vacuum buffer is connected to the adsorber vessel for assisting the vacuum pump during a regeneration step.

In a particularly convenient arrangement, the purge gas inlet may be connected to the outlet of the adsorber vessel for directing purified vent gas back through the adsorber during regeneration.

Preferably, the adsorbent is selected from the group comprising: zeolites, activated carbons, carbon adsorbents or any other such adsorbent.

Advantageously, the apparatus includes flow control means for facilitating the evacuation of the buffer vessel and/or the vacuum vessel as and when desired.

Preferably, the flow control means comprises a valve in the vacuum line upstream of the vacuum vessel and buffer vessel and a valve on the vacuum side of the buffer vessel.

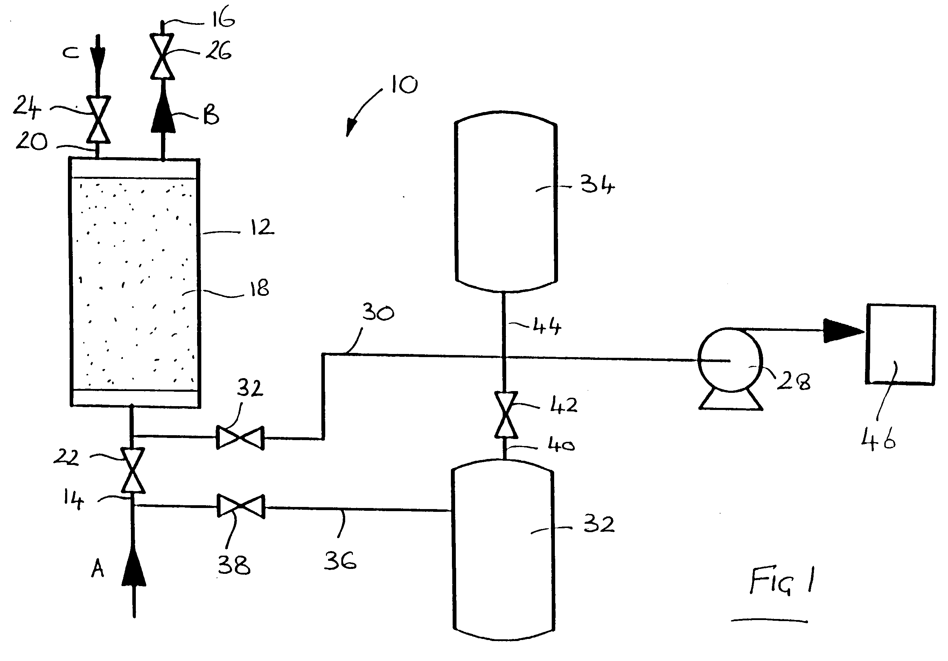

The present invention will now be more particularly described by way of example with reference to Figure 1 attached hereto which is a schematic representation of a solvent recovery apparatus according to the present invention.

The solvent recovery apparatus 10 comprises an adsorber vessel 12 having an inlet 14 for receiving vent gas containing a solvent and an outlet 16 for venting purified vent gas either to atmosphere or to a suitable collection device (not shown). The adsorber vessel 12 contains a quantity or bed of adsorbent 18, such as for example carbon, activated carbon or even zeolite and further includes a purge gas inlet 20 for supplying purge gas during bed regeneration. Each of the inlets 14, 20 and the outlet 16 are provided with flow control valves 22, 24, 26 respectively for use in a manner to be described later herein. A vacuum pump 28 is provided for regeneration and is connected to the inlet side of the adsorber vessel 12 downstream of valve 22 via vacuum line 30 and valve 32. Also connected to the vacuum line 30 are a vent gas buffer vessel 32 and a vacuum vessel 34. The vent gas first buffer 32 is connected via an inlet line 36 and valve 38 to inlet 14 at a position upstream of valve 22 and to the vacuum line via outlet line 40 and valve 42 at a position downstream of valve 32. The vacuum buffer 34 is similarly connected to the vacuum line 30 via inlet/outlet line 44.

There follows hereafter a description of the operating steps in which all valves are assumed to be closed unless otherwise stated.

In operation, solvent laden vent gas A is passed through the adsorbent 18 via inlet and outlet 14, 16 respectively. As the adsorbent becomes fully loaded with solvent, the adsorption front moves progressively up the bed. Before breakthrough occurs the bed 12 is isolated from the vent gas supply stream by closing valves 22 and 26 and is regenerated by means of vacuum pump 28 which evacuates the contents therefrom via open valve 32 and vacuum line 30. When the bed 12 is nearly regenerated, valve 24 is partly opened to allow a purge flow down through the bed for final clean-up. Preferably, the purge gas C is cleaned vent gas B and hence connecting pipes (not shown) may be provided for connecting a source of the cleaned vent gas B to the purge gas inlet 20. During bed regeneration, vent gas A is directed towards a buffer 32 via inlet line 36 and open valve 38 so as to avoid it being released to atmosphere. The vent gas buffer 32 may be placed under a partial vacuum by opening valve 42 and allowing the vacuum pump 28 to lower the pressure therein between regeneration cycles. If buffer 32 is operated under a partial vacuum then valve 38 is progressively opened to keep the vent line pressure constant. Vent gas drawn into buffer 32 may be passed back along line 36 and into the adsorber 12 once adsorption commences or may be evacuated via line 30 and pump 28 for further treatment or storage as required. Vacuum buffer 34 is directly linked to vacuum line 30 so as to enable the vacuum pump to operate continuously and be of a smaller than conventional size. The vacuum generated in vessel 34 is used to assist the vacuum pump during the regeneration step. A refrigeration condenser shown schematically at 46 may be used to concentrate the solvent so that it can be recycled.

The above mentioned device is essentially a no-loss solvent recovery system with the advantage of solvent recycling.

## Claims

1. A solvent recovery apparatus (10) for recovering solvent from a vent gas comprising:
an adsorber vessel (12), having an inlet (14) for receiving vent gas, an outlet (16) for expelling purified gas and a purge gas inlet (20);
an adsorbent (18), in said vessel (12) and being suitable for adsorbing said solvent;
a vacuum pump (28) connected to the inlet (14) of said adsorber vessel (12) via a vacuum line (30);
a buffer vessel (32), for receiving vent gas when it is not being passed to the adsorber vessel (12);
a vacuum buffer (34) connected to the buffer vessel (32) for reducing the pressure therein and to the vacuum pump (28) for having its pressure reduced.

2. An apparatus (10) as claimed in Claim 1 characterised by a buffer input control valve (38) for controlling the rate of feed to the buffer vessel.

3. An apparatus (10) as claimed in Claim 1 or Claim 2 characterised by a buffer vacuum control valve (42) for controlling the magnitude of the vacuum experienced by the buffer vessel (32).

4. An apparatus (10) as claimed in any one of the preceding claims characterised in that the vacuum buffer (34) is connected to the adsorber vessel for assisting the vacuum pump (28) during a regeneration step.

5. An apparatus as claimed in any one of the preceding claims characterised in that the purge gas inlet (20) is connected to the outlet of the adsorber vessel for directing purified vent gas back through the adsorber vessel (12) during regeneration.

6. An apparatus as claimed in any one of the preceding claims characterised in that the adsorbent (18) comprises one or more of the following: zeolites, activated carbons or carbon adsorbents.

7. An apparatus as claimed in any one of the preceding claims characterised by flow control means for facilitating the evacuation of the buffer vessel and/or the vacuum buffer vessel as and when desired.

8. An apparatus as claimed in Claim 7 in which the flow control means comprises a valve (32) in the vacuum line upstream of the vacuum buffer and the buffer vessel and a valve (42) on the vacuum side of said buffer vessel (32).

## Patentansprüche

1. Lösungsmittelrückgewinnungseinrichtung (10) zur Rückgewinnung von Lösungsmittel aus einem Abgas, welche umfaßt
ein Adsorptionsgefäß (12) mit einem Einlaß (14) zur Aufnahme von Abgas, einen Auslaß (16) für den Austritt von gereinigtem Gas, und einen Reinigungsgaseinlaß (20),
ein Adsorptionsmittel (18) in dem Gefäß (12), das für das Adsorbieren des Lösungsmittels geeignet ist,
eine Vakuumpumpe (28), die mit dem Einlaß (14) des Adsorptionsgefäßes (12) über eine Vakuumleitung (30) verbunden ist,
ein Puffergefäß (32) zur Aufnahme von Abgas, wenn es nicht zum Adsorptionsgefäß (12) geleitet wird,
einen Vakuumpuffer (34), der mit dem Puffergefäß (32) verbunden ist, um den Druck in diesem abzusenken, und mit der Vakuumpumpe (28) verbunden ist, um seinen Druck abzusenken.

2. Einrichtung (10) nach Anspruch 1, gekennzeichnet durch ein Puffereinlaßsteuerventil (38) zur Steuerung der Zuführrate zum Puffergefäß.

3. Einrichtung (10) nach Anspruch 1 oder 2, gekennzeichnet durch ein Puffervakuumsteuerventil (42) zur Steuerung der Größe des Vakuums im Puffergefäß (32).

4. Einrichtung (10) nach einem der vorhergehenden Ansprüche, dadurch gekennzeichnet, daß der Vakuumpuffer (34) mit dem Adsorptionsgefäß verbunden ist, um die Vakuumpumpe (28) während eines Regenerationsschritts zu unterstützen.

5. Einrichtung nach einem der vorhergehenden Ansprüche, dadurch gekennzeichnet, daß der Reinigungsgaseinlaß (20) mit dem Auslaß des Adsorptionsgefäßes verbunden ist, um gereinigtes Abgas während der Regeneration durch das Adsorptionsgefäß (12) zurückzuleiten.

6. Einrichtung nach einem der vorhergehenden Ansprüche, dadurch gekennzeichnet, daß das Adsorptionsmittel (18) einen oder mehrere der folgenden Stoffe umfaßt: Zeolithe, aktivierte Kohlen oder Kohleadsorptionsmittel.

7. Einrichtung nach einem der vorhergehenden Ansprüche, gekennzeichnet durch Strömungssteuermittel zur Erleichterung des Evakuierens des Puffergefäßes und/oder des Vakuumpuffergefäßes nach Bedarf.

8. Einrichtung nach Anspruch 7, wobei die Strömungssteuermittel ein Ventil (32) in der Vakuumleitung stromauf des Vakuumpuffers und des Puffergefäßes und ein Ventil (42) auf der Vakuumseite des Puffergefäßes (32) umfassen.

## Revendications

1. Dispositif (10) de récupération d'un solvant pour récupérer un solvant dans un gaz d'évacuation, comprenant :
une cuve d'adsorption (12) ayant une entrée (14) pour recevoir un gaz d'évacuation, une sortie (16) pour expulser le gaz épuré et une entrée (20) pour un gaz de purge ;
un adsorbant (18), placé dans ladite cuve (12) et apte à adsorber ledit solvant ;
une pompe à vide (28) reliée à l'entrée (14) de ladite cuve d'adsorption (12) via une canalisation à vide (30) ;
une cuve tampon (32), destinée à recevoir le gaz d'évacuation lorsqu'il n'est pas envoyé vers la cuve d'adsorption (12) ;
un tampon à vide (34) relié à la cuve tampon (32) pour réduire la pression dans celle-ci, et à la pompe à vide (28) pour réduire sa pression.

2. Dispositif (10) selon la Revendication 1, ***caractérisé par*** une vanne (38) de commande de l'entrée de la cuve tampon pour contrôler le débit d'alimentation vers la cuve tampon.

3. Dispositif (10) selon la Revendication 1 ou la Revendication 2, ***caractérisé par*** une vanne (42) de commande du vide de la cuve tampon pour contrôler l'amplitude du vide expérimenté par là cuve tampon (32).

4. Dispositif (10) selon l'une quelconque des Revendications précédentes, ***caractérisé en ce que*** le tampon à vide (34) est relié à la cuve d'adsorption pour assister la pompe à vide (28) pendant une étape de régénération.

5. Dispositif selon l'une quelconque des Revendications précédentes, ***caractérisé en ce que*** l'entrée (20) du gaz de purge est reliée à la sortie de la cuve d'adsorption pour renvoyer le gaz d'évacuation épuré dans la cuve d'adsorption (12) pendant la régénération.

6. Dispositif selon l'une quelconque des Revendications précédentes, ***caractérisé en ce que*** l'adsorbant (18) comprend un ou plusieurs des éléments suivants : zéolithes, charbons actifs, adsorbants au charbon.

7. Dispositif selon l'une quelconque des Revendications précédentes, ***caractérisé par*** des moyens de commande du débit pour faciliter l'évacuation de la cuve tampon et/ou de la cuve du tampon à vide comme et lorsque désiré.

8. Dispositif selon la Revendications 7, dans lequel les moyens de commande du débit comprennent une vanne (32) dans la canalisation à vide en amont du tampon à vide et de la cuve tampon, et une vanne (42) côté vide de ladite cuve tampon (32).
